# EUROPÄISCHE PATENTANMELDUNG

(11) **EP 1 645 341 A1**
(43) Veröffentlichungstag der Anmeldung: **12.04.2006**
(21) Anmeldenummer: 05021622.5
(22) Anmeldetag: 04.10.2005
(51) Int. Cl.: B08B 1/00, B08B 1/02

(54) **Reinigungseinrichtung insbesondere für Backbleche**

(30) Priorität: 08.10.2004 AT 7292004
(71) Anmelder: FMT Industrieholding GmbH, 4600 Thalheim bei Wels (AT)
(72) Erfinder: Plasser, Johannes, Ing., 4600 Thalheim bei Wels (AT); Aichinger, Alois, 4600 Thalheim bei Wels (AT)
(74) Vertreter: Secklehner, Günter

(57) **Zusammenfassung**

Die Erfindung betrifft eine Reinigungseinrichtung (1), insbesondere für das Trockenreinigen von Backblechen (2) im Durchlauf, mit einer eine horizontale Transportebene (8) ausbildende Transportvorrichtung (7) für die Backbleche (2) und mit einer über eine Verstelleinrichtung (23) in einer zu der Transportebene (8) senkrechten Richtung in einem Maschinengestell (3) verstellbaren, durch ein endloses Bürstband (30) gebildeten, Bürstvorrichtung (10). Die Bürstvorrichtung (10) wird durch zumindest zwei, die zu reinigende Oberfläche der Backbleche (2) quer zur Transportrichtung (12) der Backbleche (2) beaufschlagende Bürstbänder (30) gebildet. Dabei wird zumindest ein Bürstband (30) in entgegengesetzter Umlaufrichtung zu den restlichen Bürstbändern (30) betrieben. Weiters betrifft die Erfindung auch eine Bandbürstvorrichtung.

## Beschreibung

Die Erfindung betrifft eine Reinigungseinrichtung, wie im Oberbegriff der Ansprüche 1 und 21 beschrieben.

Zur Reinigung von flächigen Gegenständen, insbesondere Backblechen im Durchlauf sind verschiedene Verfahren, die auch verschiedene Formen von Bürsten einsetzen, bekannt.

Die deutsche Patentschrift DE 196 26 177 C1 offenbart eine Verstellvorrichtung für eine Reinigungsvorrichtung, bei der zu reinigende, ebene Werkstücke in einem horizontalen Durchlauf von einem quer zur Transportrichtung der Werkstücke wirkenden, endlos umlaufenden Bürstband gereinigt werden. Zur Vermeidung von Kollisionen bei schwankenden Werkstückhöhen ist die Reinigungsvorrichtung mit einer automatisierbaren Verstellvorrichtung für die vertikale Lage der Reinigungsvorrichtung verbunden.

In der weiteren Schrift DE 43 14 046 C2 ist ebenfalls eine Reinigung von Oberflächen mittels quer zur Transportrichtung wirkendem, endlos umlaufenden Bürstband beschrieben, wobei der Reinigungseffekt durch geregelte Befeuchtung der Borsten auf dem Bürstband verbessert wird.

DE 94 13 348 U1 beschreibt eine Reinigungsvorrichtung zur Trockenreinigung von Backblechen mittels Bürstwalzen und Topfbürsten wobei deren Anordnung die Reinigung an den Rand- und Eckbereichen der Backbleche und die Reinigung von gelochten Backblechen verbessert.

In der EP 1 319 447 A2 ist eine Reinigungsvorrichtung für Backbleche beschrieben, die Bürstwalzen und Tellerbürsten enthält, wobei auch die Transportwalzen einen Borstenbesatz aufweisen.

Bei Backblechen mit profiliertem Boden für speziell geformte Backwaren ist der Einsatz von Bürstwalzen nur eingeschränkt möglich, da durch die steifen Wellen eine geringere Anpassung an wechselnde Oberflächenformen möglich ist als z. B. bei bandförmigen Bürstmitteln. Speziell bei beschichteten Backblechen mit nur schwach anhaftenden Verunreinigungen sind die Beanspruchungen durch die üblicherweise verwendeten Bürstwalzen unnötig hoch, besonders wenn die Bürstwalzen mit hohen Kontaktkräften arbeiten müssen, um auch in Vertiefungen noch wirken zu können.

Aufgabe der Erfindung ist es nunmehr, eine Reinigungseinrichtung insbesondere für Backbleche mit schwach anhaftenden Verunreinigungen zu schaffen, mit der die Oberseiten der Backbleche trotz profiliertem Backblechboden im Durchlauf schonend und gründlich gereinigt werden können.

Diese Aufgabe der Erfindung wird durch die im Kennzeichenteil der Ansprüche 1 und 21 wiedergegebenen Merkmale erreicht. Der überraschende Vorteil der erfindungsgemäßen Ausführung besteht darin, dass die Reinigungswirkung der Reinigungseinrichtung durch die Hintereinanderschaltung von mehreren quer zur Transportrichtung der Backbleche angeordneten, in entgegengesetzten Umlaufrichtungen wirkenden Bürstbändern deutlich gesteigert werden kann, die auf die Backbleche einwirkenden, resultierenden seitlichen Kräfte und Momente und daraus entstehenden Nachteile jedoch durch die entgegengesetzten Wirkrichtungen deutlich reduziert werden können.

Durch die Ausbildung nach den Ansprüchen 2 bis 4 kann die erfindungsgemäße Wirkung mit nur zwei Wellen, auf denen alle Bürstbänder mittels Umlenkmitteln gleichzeitig angeordnet sind, erzielt werden, wodurch ein einfacher Maschinenaufbau und geringer Platzbedarf der Bürstvorrichtung erreicht wird.

Die Ausbildungen nach den Ansprüchen 5, 6, 16 bis 19 gewährleisten eine einfache Montage und Demontage der Bürstbänder über die auf einer Seite freien Wellenenden der Bürstvorrichtung.

Die zusätzlichen Gegendruckrollen gemäß Anspruch 7 verhindern, dass die Bürstbänder zwischen den Umlenkmitteln nach oben ausweichen und die Reinigungswirkung dadurch negativ beeinflusst wird.

Die Ansprüche 8 bis 10 beschreiben die vorteilhafte Ausbildung der Reinigungseinrichtung mit Riemen- oder Bandtransport, der gegenüber einer Ausbildung mit Walzen oder Rollen auch Backbleche mit profilierten Böden zuverlässig transportieren kann.

Gegenüber feststehenden seitlichen Führungen bewirken Führungsriemen gemäß den Ansprüchen 11 und 12 geringere Reibungskräfte und dadurch ebenfalls einen zuverlässigen Transport der Backbleche.

Keilriemenbürsten und Keilriemenscheiben nach Anspruch 13 sind von verschiedenen Herstellern als Standardprodukte erhältlich und bilden eine zuverlässige und robuste Ausführungsvariante der Bürstvorrichtung.

Für eine Anpassbarkeit der Reinigungseinrichtung an verschiedene Backblechausführungen und gute Zugänglichkeit für die Maschinenreinigung ist die in den Ansprüchen 14 und 15 beschriebene Ausbildung mit höhenverstellbarer Bürstvorrichtung vorteilhaft.

Die Ausführung nach Anspruch 20 mit drehzahlregelbaren Getriebemotoren erleichtert neben der Verwendung als Einzelmaschine auch die Einbindung in verkettete Maschinenlinien von Großbäckereien und Lebensmittelindustrie.

Die Erfindung betrifft auch eine Bandbürstvorrichtung wie im Oberbegriff des Anspruches 21 beschrieben.

Aufgabe der Erfindung ist es eine Bandbürstvorrichtung zu schaffen, die für Reinigungszwecke, insbesondere für Backbleche, an unterschiedlichen Einrichtungen einsetzbar ist.

Diese Aufgabe wird durch die im Anspruch 21 wiedergegebenen, kennzeichnenden Merkmale erreicht. Der überraschende Vorteil dabei ist, dass durch die entgegengesetzte Umlaufrichtung der Bürstbänder ein erhöhter Reinigungseffekt insbesondere bei profilierten Oberflächen erzielt wird und die auf die zu reinigenden Oberflächen wirkenden resultierenden Kräfte und Momente minimiert werden.

Von Vorteil sind auch die Ausbildungen nach den Ansprüchen 22 bis 28. Durch die Verstellbarkeit einer der zwei parallelen Antriebswellen werden Demontage, Montage und erforderlichenfalls das Nachspannen der Bürstbänder erleichtert und Stillstandszeiten verringert.

Zwischen den Antriebswellen angeordnete Gegendruckrollen wirken einem Ausweichen der Bürstbänder entgegen und gewährleisten eine gleichmäßige Reinigungswirkung über die Wirklänge der Bürstbänder. Die Verwendung von Keilriemenbürsten und Keilriemenscheiben gewährleistet eine robuste Ausführung und gestattet Standardprodukte von verschiedenen Anbietern einzusetzen.

Zum besseren Verständnis der Erfindung wird diese anhand des in den Figuren gezeigten Ausführungsbeispieles näher erläutert.

Es zeigen:
- Fig. 1: eine erfindungsgemäße Reinigungseinrichtung geschnitten gemäß den Linien I-I in Figur 2;
- Fig. 2: die erfindungsgemäße Reinigungseinrichtung in Draufsicht;
- Fig. 3: die erfindungsgemäße Reinigungseinrichtung in Transportrichtung der Backbleche gesehen;
- Fig. 4: die Lagerung der Umlenkmittel für die Bürstbänder auf den Antriebswellen in stark vereinfachter, schematischer Darstellung.

Einführend sei festgehalten, dass in der beschriebenen Ausführungsform gleiche Teile mit gleichen Bezugszeichen bzw. Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus dem gezeigten und beschriebenen Ausführungsbeispiel für sich eigenständige, erfinderische oder erfindungsgemäße Lösungen darstellen.

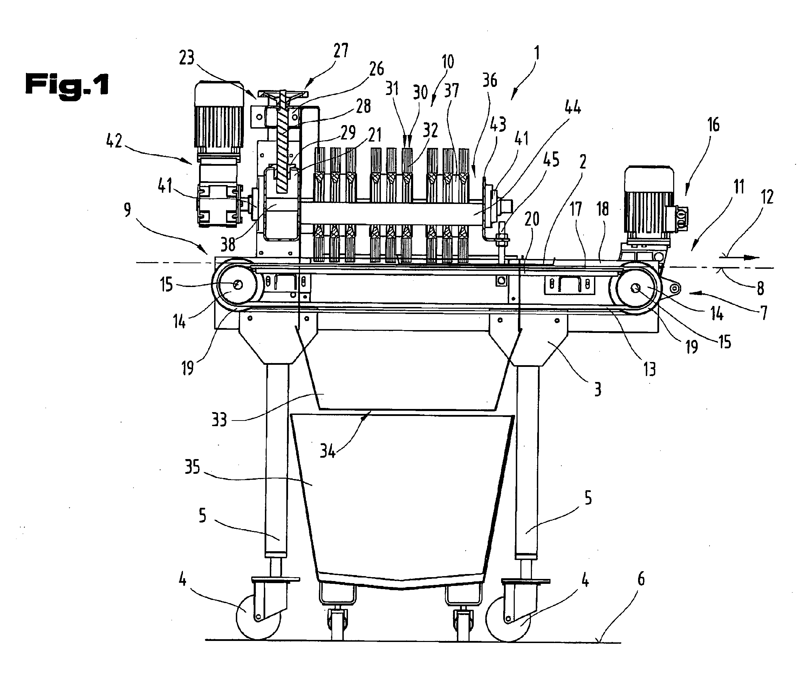

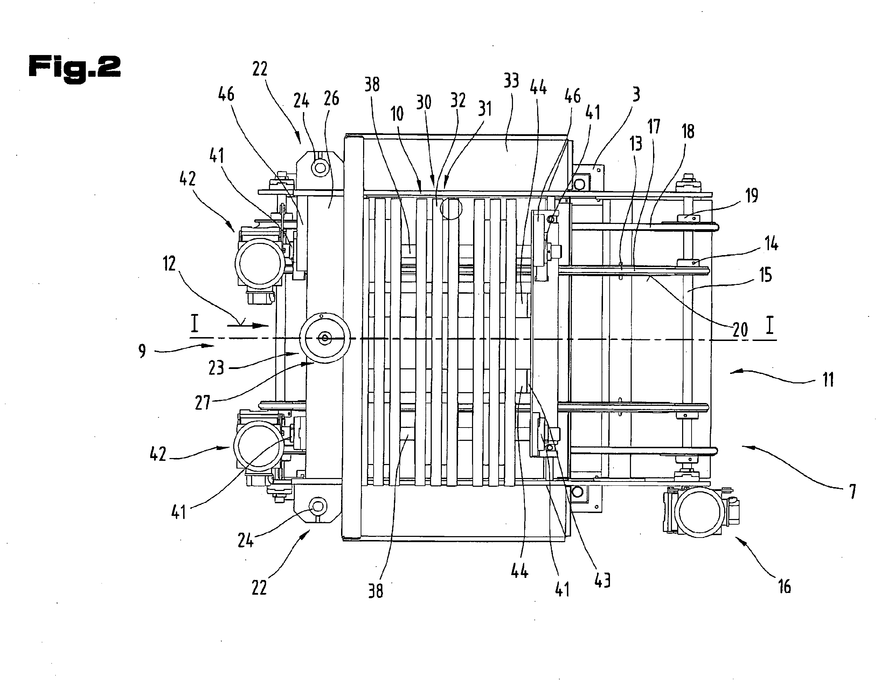

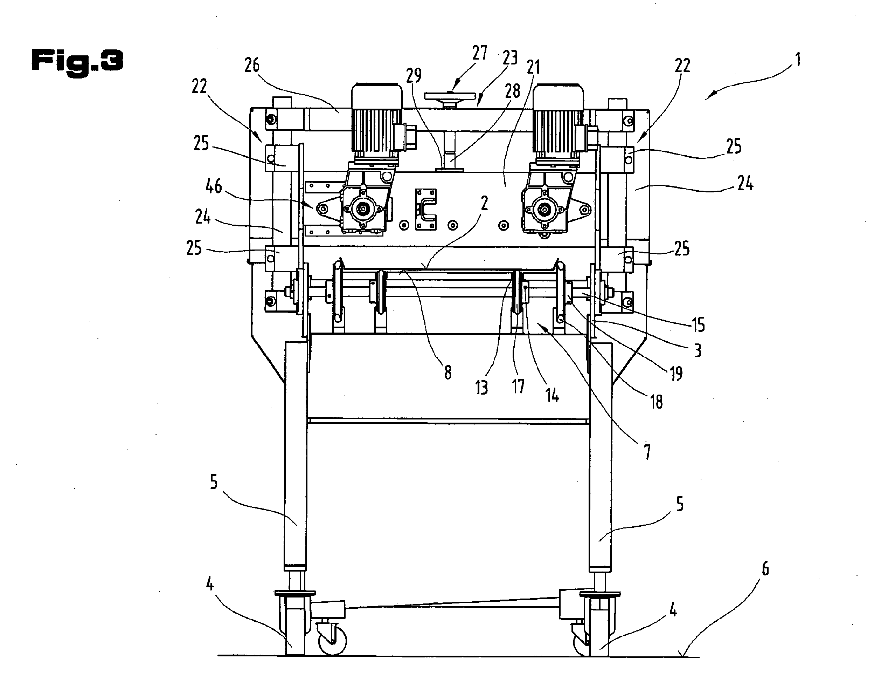

In den Figuren 1, 2 und 3 ist eine Reinigungseinrichtung 1 insbesondere zur Trockenreinigung von Backblechen 2 im Durchlauf dargestellt. Auf einem Maschinengestell 3, welches bevorzugt über mit Laufrollen 4 versehenen Stützen 5 auf einer Aufstandsfläche 6 abgestützt ist, ist eine Transportvorrichtung 7 angeordnet, welche die Backbleche 2 in einer Transportebene 8 parallel zur Aufstandsfläche 6 von einem Einlaufabschnitt 9 der Reinigungseinrichtung 1 durch den Wirkbereich einer Bürstvorrichtung 10 zu einem Auslaufabschnitt 11 der Reinigungseinrichtung 1 transportiert.

Die Backbleche 2 liegen zwischen Einlaufabschnitt 9 und Auslaufabschnitt 11 auf zumindest einem, in Transportrichtung 12 angetriebenen, endlos umlaufenden Transportmittel 13 auf und werden durch Reibungskräfte transportiert. Das Transportmittel 13 wird mittels Umlenkmittel 14, vorzugsweise Scheiben oder Rollen um zwei parallele Wellen 15 geführt, wobei eine der Wellen 15 mit einer Antriebsvorrichtung 16 antriebsverbunden ist.

Das Transportmittel 13 besteht bei der beschriebenen Ausführung der Reinigungseinrichtung 1 aus zwei profilierten Transportriemen 17 es kann z.B. aber auch als Transportband ausgeführt sein.

Darüber hinaus kann die Transportvorrichtung 7 auch durch angetriebene Transportwalzen gebildet sein.

Seitlich werden die Backbleche 2 beim Transportvorgang vorzugsweise durch Führungsriemen 18 geführt, deren Umlenkmittel 19 auf den selben Wellen 15 angeordnet sind, wie die Umlenkmittel 14 des Transportmittels 13. Der Höhenabstand der Führungsriemen 18 von der Transportebene 8 ist durch geeignete Durchmesserwahl der Umlenkmittel 19 an die Form der Backblechränder angepasst.

Das Transportmittel 13 ist zwischen Einlaufabschnitt 9 und Auslaufabschnitt 11 zur Vermeidung von Durchbiegung unterstützt, in der beschriebenen Ausführung werden die Transportriemen 17 jeweils von einem Führungselement 20 unterstützt, das als Gleitschiene oder als Rollenschiene ausgebildet sein kann.

Die Bürstvorrichtung 10 ist an einem balkenförmigen Geräteträger 21 angeordnet, der über der Transportebene 8 mit einer Längserstreckung rechtwinkelig zur Transportrichtung 12 der Backbleche in einer Führungsanordnung 22 gelagert ist und dessen vertikale Lage sich mittels einer Verstelleinrichtung 23 einstellen lässt.

Zur Führungsanordnung 22 gehören zwei mit dem Maschinengestell 3 verbundene, vertikale Führungen 24, an denen der Geräteträger 21 mittels Führungselementen 25 vertikal verschiebbar gelagert ist. Die Verstelleinrichtung 23 wirkt zwischen einem, mit dem Maschinengestell fest verbundenen Querträger 26 und dem Geräteträger 21, wobei die Verstelleinrichtung 23 etwa durch einen Gewindespindelantrieb 27 oder einen sonstigen, evtl. programmgesteuerten Linearantrieb gebildet sein kann.

Bei der dargestellten Ausführung ist zur Höhenverstellung des Geräteträgers 21 am Querträger 26 eine Gewindespindel 28 drehbar und axial fixiert gelagert, die mit einer fest mit dem Geräteträger 21 verbundenen Gewindemutter 29 zusammenwirkt.

Die Bürstvorrichtung 10 besteht aus zumindest zwei endlos umlaufenden Bürstbändern 30, vorzugsweise Keilriemenbürsten 31, deren Borstenbesatz 32 die Oberseite der zu reinigenden Backbleche 2 horizontal und rechtwinkelig zur Transportrichtung 7 überstreicht und dabei reinigt. Die von den Backblechen 2 abtransportieren Partikel werden seitlich der Backbleche 2 von einem am Maschinengestell 3 montierten mehrteiligen Auffangblech 33 erfasst und durch eine Austragöffnung 34 einem Sammelbehälter 35 oder einer sonstigen Sammeleinrichtung zugeführt.

In der erfindungsgemäßen Reinigungsvorrichtung 1 wird mindestens ein Bürstband 30 in entgegengesetzter Umlaufrichtung zu den restlichen Bürstbändern 30 betrieben, wodurch die Reinigungswirkung weiter verbessert wird und durch geeignete Festlegung der Umlaufrichtungen der Bürstbänder 30 resultierende Seitenkräfte und Momente auf die Backbleche 2 während des Reinigungsvorganges minimiert werden können.

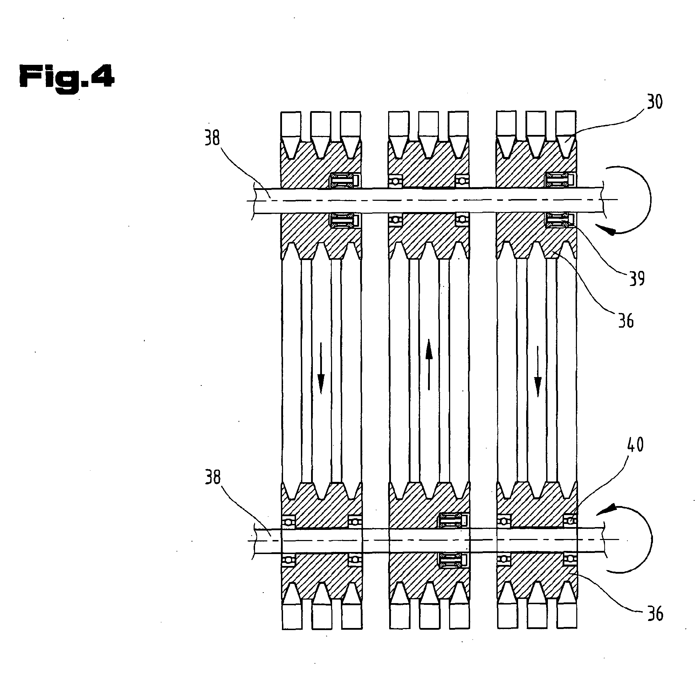

Die Bürstbänder 30 sind mittels Umlenkmittel 36, vorzugsweise Keilriemenscheiben 37 auf zwei in einem horizontalen Abstand zueinander und parallel zur Transportrichtung 12 angeordneten Antriebswellen 38 montiert. Jeweils eines von zwei zu einem Bürstband 30 gehörenden Umlenkmitteln 36 ist auf einer der beiden Antriebswellen 38 fest montiert z.B. mit einem Spannsatz 39, während das zweite Umlenkmittel auf der gegenüberliegenden Antriebswelle nur gegen axiale Verschiebung gesichert, ansonsten aber frei drehbar z.B. mit Wälzlagern 40 gelagert ist (Fig. 4).

Zusätzlich sind die beiden Antriebswellen 38 gegensinnig angetrieben, wodurch die Umlaufrichtung des zu einem Umlenkmittelpaar gehörenden Bürstbandes 30 dadurch bestimmt wird, auf welcher der beiden Antriebswellen 38 das fest montierte Umlenkmittel 36 angeordnet ist.

Diese Ausführung der Umlenkmittellagerung ermöglicht, dass die Backbleche 2 während eines Durchlaufes mit unterschiedlichen Wirkrichtungen der Bürstbänder 30 beaufschlagt werden.

In der beschriebenen Ausführungsvariante wird durch die Verwendung von Transportriemen 17 und die Länge und Flexibilität des Borstenbesatzes 32 auch der Transport von profilierten Backblechen einfach möglich und gleichzeitig die Schonung von empfindlichen Oberflächenbeschichtungen gewährleistet.

Jeweils ein Ende der beiden Antriebswellen 38 der Bürstvorrichtung 10 ist durch den Geräteträger 21 geführt, auf der den Bürstbändern 30 abgewandten Seite des Geräteträgers 21 in einem Lager 41 gelagert und mit der zugehörigen Antriebsvorrichtung 42 verbunden. Das jeweils andere Ende der Antriebswellen 38 ist in einem Lager 41 auf einer das Maschinengestell 3 rechtwinkelig zur Transportrichtung 12 überspannenden Lagerplatte 43 gelagert.

Diese Lagerplatte 43 ist mittels Tragarmen 44, die zwischen den beiden Antriebswellen 38 angeordnet sind, am Geräteträger 21 befestigt und zusätzlich über Stützen 45 am Maschinengestell 3 abgestützt. Diese Stützen sind in der dargestellten Ausführungsform Gewindestangen, welche durch die Anordnung auf einer im Maschinengestell 3 gelagerten Achse nach Lösen von Befestigungsmuttern von der Lagerplatte weggeschwenkt werden können.

Dadurch können die endlosen Bürstbänder 30 stirnseitig über die in der Lagerplatte 43 gelagerten Wellenenden einfach montiert oder demontiert werden.

Eine der beiden Antriebswellen 38 kann mittels einer am Geräteträger 21 und an der Lagerplatte 43 angeordneten Führungsanordnung 46 in ihrem horizontalen Abstand von der anderen Antriebswelle 38 verstellt werden. Dieser Verstellvorgang kann z.B. durch Gewindespindeln oder zwei synchron arbeitende Pneumatikzylinder, die am Geräteträger 21 und an der Lagerplatte 43 angeordnet sind, bewerkstelligt werden, wodurch alle Bürstbänder 30 gleichzeitig gespannt oder entspannt werden.

Die Bürstbänder 30 können zwischen den Antriebswellen 38 mit Gegendruckrollen ausgestattet sein, welche die Bürstbänder zusätzlich auf die zu reinigenden Backblechoberseiten drücken. Diese können vorteilhaft am Geräteträger 21 und der Lagerplatte 43 montiert sein.

Die Antriebsvorrichtungen 16 und 42 sind vorzugsweise Getriebemotoren mit regelbarer Drehzahl, wodurch sich die Umlaufgeschwindigkeit der Bürstbänder 30 sowie die Transportgeschwindigkeit der Backbleche 2 einstellen lässt.

Der Ordnung halber sei abschließend darauf hingewiesen, dass zum besseren Verständnis des Aufbaues der Reinigungseinrichtung 1 diese, bzw. deren Bestandteile teilweise unmaßstäblich und/oder vergrößert und/oder verkleinert dargestellt wurden.

Die in den Fig. 1, 2, 3; 4 gezeigte Ausführung kann den Gegenstand von eigenständigen, erfindungsgemäßen Lösungen bilden. Die diesbezüglichen, erfindungsgemäßen Aufgaben und Lösungen sind der Detailbeschreibung dieser Figuren zu entnehmen.

### Bezugszeichenaufstellung

- 1: Reinigungseinrichtung
- 2: Backblech
- 3: Maschinengestell
- 4: Laufrolle
- 5: Stütze

- 6: Aufstandsfläche
- 7: Transportvorrichtung
- 8: Transportebene
- 9: Einlaufabschnitt
- 10: Bürstvorrichtung

- 11: Auslaufabschnitt
- 12: Transportrichtung
- 13: Transportmittel
- 14: Umlenkmittel
- 15: Welle

- 16: Antriebsvorrichtung
- 17: Transportriemen
- 18: Führungsriemen
- 19: Umlenkmittel
- 20: Führungselement

- 21: Geräteträger
- 22: Führungsanordnung
- 23: Verstelleinrichtung
- 24: Führung
- 25: Führungselement

- 26: Querträger
- 27: Gewindespindelantrieb
- 28: Gewindespindel
- 29: Gewindemutter
- 30: Bürstband

- 31: Keilriemenbürste
- 32: Borstenbesatz
- 33: Auffangblech
- 34: Austragöffnung
- 35: Sammelbehälter

- 36: Umlenkmittel
- 37: Keilriemenscheibe
- 38: Antriebswelle
- 39: Spannsatz
- 40: Wälzlager

- 41: Lager
- 42: Antriebsvorrichtung
- 43: Lagerplatte
- 44: Tragarm
- 45: Stütze

- 46: Führungsanordnung

## Patentansprüche

1. Reinigungseinrichtung (1), insbesondere für das Trockenreinigen von Backblechen (2) im Durchlauf, mit einer eine horizontale Transportebene (8) ausbildende Transportvorrichtung (7) für die Backbleche (2) und mit einer über eine Verstelleinrichtung (23) in einer zu der Transportebene (8) senkrechten Richtung in einem Maschinengestell (3) verstellbaren, durch ein endloses Bürstband (30) gebildeten, Bürstvorrichtung (10), **dadurch gekennzeichnet, dass** die Bürstvorrichtung (10) durch zumindest zwei, die zu reinigende Oberfläche der Backbleche (2) quer zur Transportrichtung (12) der Backbleche (2) beaufschlagende Bürstbänder (30) gebildet ist und dass mindestens ein Bürstband (30) in entgegengesetzter Umlaufrichtung zu den restlichen Bürstbändern (30) betrieben wird.

2. Reinigungseinrichtung (1) nach Anspruch 1, **dadurch gekennzeichnet, dass** zwei einem Bürstband (30) zugeordnete Umlenkmittel (36) auf gegensinnig drehenden, zueinander parallelen Antriebswellen (38) angeordnet sind, wobei ein Umlenkmittel (36) fest mit einer der beiden Antriebswellen (38) verbunden ist, während das andere Umlenkmittel (36) auf der gegenüberliegenden Antriebswelle (38) drehbar gelagert ist.

3. Reinigungseinrichtung (1) nach Anspruch 2, **dadurch gekennzeichnet, dass** die festen Verbindungen zwischen Umlenkmitteln (36) und Antriebswellen (38) durch Spannsätze (39) gebildet ist.

4. Reinigungseinrichtung (1) nach Anspruch 2, **dadurch gekennzeichnet, dass** die drehbare Lagerung zwischen Umlenkmitteln (36) und Antriebswellen (38) durch Wälzlager (40) gebildet ist.

5. Reinigungseinrichtung (1) nach einem der vorhergehenden Ansprüche, **dadurch gekennzeichnet, dass** eine der Antriebswellen (38) in einer Führungsanordnung (46) zur Verstellung eines Achsabstandes zwischen den beiden Antriebswellen (38) der Bürstbänder (30) gelagert ist.

6. Reinigungseinrichtung (1) nach Anspruch 5, **dadurch gekennzeichnet, dass** die Verstellung des Achsabstandes mit Gewindespindeln oder Pneumatikzylindern erfolgt.

7. Reinigungseinrichtung (1) nach einem der vorhergehenden Ansprüche, **dadurch gekennzeichnet, dass** die Bürstbänder (30) zwischen den Antriebswellen (38) mit Gegendruckrollen an die Backbleche (2) angedrückt werden.

8. Reinigungseinrichtung (1) nach einem der vorhergehenden Ansprüche, **dadurch gekennzeichnet, dass** die Transportvorrichtung (7) aus zumindest einem angetriebenen, endlos umlaufenden Transportmittel (13) gebildet ist.

9. Reinigungseinrichtung (1) nach Anspruch 8, **dadurch gekennzeichnet, dass** das Transportmittel (13) aus zumindest zwei profilierten Transportriemen (17) gebildet ist.

10. Reinigungseinrichtung (1) nach Anspruch 8, **dadurch gekennzeichnet, dass** das Transportmittel (13) aus einem Transportband gebildet ist.

11. Reinigungseinrichtung (1) nach einem der vorhergehenden Ansprüche, **dadurch gekennzeichnet, dass** die zu reinigenden Backbleche (2) seitlich durch Führungsriemen (18) geführt sind.

12. Reinigungseinrichtung (1) nach Anspruch 11, **dadurch gekennzeichnet, dass** die Führungsriemen (18) und das Transportmittel (13) mittels Umlenkmitteln (14, 19) auf gemeinsamen Wellen (15) angeordnet sind.

13. Reinigungseinrichtung (1) nach einem der vorhergehenden Ansprüche, **dadurch gekennzeichnet, dass** die Bürstbänder (30) als Keilriemenbürsten (31) und diesen zugeordnete Umlenkmittel (36) als ein- oder mehrrillige Keilriemenscheiben (37) ausgebildet sind.

14. Reinigungseinrichtung (1) nach einem der vorhergehenden Ansprüche, **dadurch gekennzeichnet, dass** die Bürstvorrichtung (10) an einem mittels einer Verstelleinrichtung (23) höhenverstellbaren, balkenförmigen Geräteträger (21) angeordnet ist, der oberhalb der Transportebene (8) mit einer Längserstreckung rechtwinkelig zur Transportrichtung (12) der Backbleche (2) verläuft und in einer Führungsanordnung (22) vertikal zur Transportebene (8) verschiebbar geführt ist.

15. Reinigungseinrichtung (1) nach Anspruch 14, **dadurch gekennzeichnet, dass** die Verstelleinrichtung (23) durch einen Gewindespindelantrieb (27) gebildet ist.

16. Reinigungseinrichtung (1) nach Anspruch 14, **dadurch gekennzeichnet, dass** jeweils ein Ende der Antriebswellen (38) für die Bürstvorrichtung (10) am Geräteträger (21) gelagert ist.

17. Reinigungseinrichtung (1) nach Anspruch 16, **dadurch gekennzeichnet, dass** das am Geräteträger (21) gelagerte Ende der Antriebswelle (38) von einer am Geräteträger (21) befestigten Antriebsvorrichtung (42) angetrieben ist.

18. Reinigungseinrichtung (1) nach Anspruch 17, **dadurch gekennzeichnet, dass** die Antriebswellen (38) mit ihren den Antriebsvorrichtungen (42) gegenüberliegenden Enden in einer Lagerplatte (43) gelagert sind, die mit Tragarmen (44) zwischen den Antriebswellen (3 8) am Geräteträger (21) befestigt ist.

19. Reinigungseinrichtung (1) nach Anspruch 18, **dadurch gekennzeichnet, dass** die Lagerplatte (43) am Maschinengestell (3) mittels schwenkbaren oder demontierbaren Stützen (45) abgestützt ist.

20. Reinigungseinrichtung (1) nach einem der vorhergehenden Ansprüche, **dadurch gekennzeichnet, dass** die Antriebsvorrichtungen (16, 42) als drehzahlregelbare Getriebemotoren ausgebildet sind.

21. Bandbürstvorrichtung mit einem Geräteträger (21) und mit zwei in diesem in einen Abstand gelagerten parallel zueinander verlaufenden, mit Antriebsvorrichtungen (42) antriebsverbundenen Antriebswellen (38) mit auf diesen über Umlenkmittel (36) geführten endlosen Bürstbändern (30), **dadurch gekennzeichnet, dass** zumindest zwei Bürstbänder (30) vorgesehen sind, die in zueinander entgegengesetzter Umlaufrichtung über die Antriebsvorrichtungen (42) angetrieben werden.

22. Bandbürstvorrichtung nach Anspruch 21, **dadurch gekennzeichnet, dass** zwei einem Bürstband (30) zugeordnete Umlenkmittel (36) auf gegensinnig drehenden, zueinander parallelen Antriebswellen (38) angeordnet sind, wobei ein Umlenkmittel (36) fest mit einer der beiden Antriebswellen (38) verbunden ist, während das andere Umlenkmittel (36) auf der gegenüberliegenden Antriebswelle (38) drehbar gelagert ist.

23. Bandbürstvorrichtung nach Anspruch 22, **dadurch gekennzeichnet, dass** die festen Verbindungen zwischen Umlenkmitteln (36) und Antriebswellen (38) durch Spannsätze (39) gebildet sind.

24. Bandbürstvorrichtung nach Anspruch 22, **dadurch gekennzeichnet, dass** die drehbare Lagerung zwischen Umlenkmitteln (36) und Antriebswellen (38) durch Wälzlager (40) gebildet ist.

25. Bandbürstvorrichtung nach einem der Ansprüche 21 bis 24, **dadurch gekennzeichnet, dass** eine der Antriebswellen (38) in einer Führungsanordnung (46) zur Verstellung eines Achsabstandes zwischen den beiden Antriebswellen (38) der Bürstbänder (30) gelagert ist.

26. Bandbürstvorrichtung nach Anspruch 25, **dadurch gekennzeichnet, dass** die Verstellung des Achsabstandes mit Gewindespindeln oder Pneumatikzylindern erfolgt.

27. Bandbürstvorrichtung nach einem der Ansprüche 21 bis 26, **dadurch gekennzeichnet, dass** die Bürstbänder (30) zwischen den Antriebswellen (38) mit Gegendruckrollen beaufschlagbar sind.

28. Bandbürstvorrichtung nach einem der Ansprüche 21 bis 27, **dadurch gekennzeichnet, dass** die Bürstbänder (30) als Keilriemenbürsten (31) und diesen zugeordnete Umlenkmittel (36) als ein- oder mehrrillige Keilriemenscheiben (37) ausgebildet sind.
